(19) Europäisches Patentamt
European Patent Office
Office européen des brevets

(11) **EP 1 380 393 B1**

(12) **EUROPÄISCHE PATENTSCHRIFT**

(45) Veröffentlichungstag und Bekanntmachung des Hinweises auf die Patenterteilung:
**29.11.2006  Patentblatt 2006/48**

(51) Int Cl.:
*B25J 9/16* (2006.01)

(21) Anmeldenummer: **03012671.8**

(22) Anmeldetag: **04.06.2003**

(54) **Verfahren zum Begrenzen der Krafteinwirkung eines Roboterteils**

Method for limiting the influence of force on a part of a robot

Procédé de limitation de l'effet d'une force sur une partie d'un robot

(84) Benannte Vertragsstaaten:
**DE FR GB IT SE**

(30) Priorität: **15.06.2002  DE 10226853**

(43) Veröffentlichungstag der Anmeldung:
**14.01.2004  Patentblatt 2004/03**

(73) Patentinhaber: **KUKA Roboter GmbH**
**86165 Augsburg (DE)**

(72) Erfinder: **Heiligensetzer, Peter**
**86159 Augsburg (DE)**

(74) Vertreter: **Lempert, Jost et al**
**Patentanwälte,**
**Dipl.-Ing. Heiner Lichti,**
**Dipl.-Phys. Dr. rer. nat. Jost Lempert,**
**Dipl.-Ing. Hartmut Lasch,**
**Postfach 41 07 60**
**76207 Karlsruhe (DE)**

(56) Entgegenhaltungen:
**EP-A- 0 380 707        EP-A- 0 689 903**
**AT-B- 401 746**

## Beschreibung

Die Erfindung betrifft ein Verfahren zum Begrenzen der Krafteinwirkung eines Roboterteils, wie eines Roboterarms, auf ein externes Objekt bei einer Kollision.

Roboter können bei Ihrem Arbeiten, wenn sie mit externen Objekten kollidieren, zu erheblichen Beschädigungen sowohl am Objekt als auch am Roboter führen. Aus diesem Grunde dürfen in der Regel im möglichen Arbeitsbereich eines Roboters keinerlei externe Objekte, sei es Sachobjekte oder Personen, anwesend sein. Zum Schutz der Person oder des Roboters werden letztere geschützt durch Zäune oder dergleichen in abgegrenzten Arbeitszellen angeordnet, die derart gesichert sind, dass beim Betreten der Arbeitszellen, beispielsweise aufgrund Öffnen einer Tür oder Überschreiten von überwachten Linien der Roboter ohne weiteres unverzüglich stillgesetzt wird. Gegebenenfalls kann er nur im Handbetrieb manuell mit reduzierter Geschwindigkeit bewegt werden. Das Stillsetzen des Roboters kann zu erheblichen Nachteilen, sei es betriebswirtschaftlicher Art (Totzeiten), sei es funktionstechnischer Art, wie Beschädigung von Werkstücken, an denen im Moment des Stillsetzens gearbeitet wird, führen. Sie sind daher unerwünscht.

Es sind Kleinroboter bekannt, bei denen die kinetischen Energien und damit im Falle einer Kollision die einwirkenden Kräfte wesentliche reduzierter sind, dennoch bei einem Arbeitsablauf eines Roboters in Bereichen liegen können, die zur Beschädigung von Objekten, Sachobjekten oder Personen, oder auch des Roboters selbst führen können. Aus den oben genannten nachteiligen Gründen einer unvermittelten Stilllegung des Roboters, wenn Objekte in den Arbeitsbereich des Roboters gelangen, versucht man, eine Stilllegung des Roboters alleine aufgrund des Umstandes, dass ein Objekt in seinen Arbeitsbereich gelangt, zu vermeiden. Darüber hinaus muss ein Roboter auch Objekte, wie Werkstücke, anfahren, um diese beispielsweise zu greifen, zu bearbeiten oder dergleichen. Auch hier kann es zu Kollisionen, d.h. zu einem Anfahren mit unerwünscht hohen Geschwindigkeiten, kinetischen Energien und damit unerwünschten hohen Krafteinwirkungen kommen.

Bei solchen Kleinrobotern wurde vorgeschlagen, für den Fall einer Kollision durch die einwirkende Kraft mit Überschreiten eines vorgegebenen Trägheitsmomentes und damit des Stromes des Antriebsmotors eine Stillsetzung zu bewirken. Weiterhin wurde zur Reduzierung der Krafteinwirkung vorgeschlagen, den Roboter bzw. seine Teile mit elastischen oder viskoelastischen Abdeckungen oder Ummantelungen zu versehen. Im ersteren Falle wurde als nachteilig angesehen, dass hierdurch das motorstrombedingte Stillsetzen des Roboters im Falle einer Kollision in unzumutbarem Maße verzögert wird, was durch eine viskoelastische Abdeckung verhindert werden soll, d.h. hier sollen die Ansprechzeiten gegenüber einer rein elastischen Abdeckung verkürzt werden (EP 689 903 A1). Dennoch ist die Krafteinwirkung in sämtlichen Fällen zu hoch, wenn der Roboter mit für den jeweiligen Arbeitsprozess optimalen Geschwindigkeiten arbeiten soll; werden aber diese Geschwindigkeiten müssen generell und grundsätzlich für den gesamten Arbeitsablauf von vornherein derart reduziert, dass im Falle einer Kollision, ggf. unter Berücksichtung der dämpfenden Abdeckungen, Beschädigungen zuverlässig vermieden werden, führt dies zu einer Reduzierung der Effizienz des Einsatzes des Roboters.

Der Erfindung liegt daher die Aufgabe zugrunde, ein Verfahren zum Begrenzen der Krafteinwirkung eines Roboterteils im Falle einer Kollision zu schaffen, welches unter Vermeidung der genannten Nachteile unter Berücksichtigung von Sicherheitsanforderungen eine Optimierung des Arbeitsablaufes des Roboters ermöglicht.

Erfindungsgemäß wird die genannte Aufgabe mit einem Verfahren der eingangs genannten Art gelöst, welches dadurch gekennzeichnet ist, dass aufgrund einer bei einer Kollision auf das Objekt wirkenden maximal zugelassenen Kraft, Maximalkraft $F_{max}$, eine korrespondierende maximal zugelassene kinetische Energie, Maximal-Energie $E_{kin,max}$, des Roboterteils bestimmt wird, dass fortwährend in hinreichend kleinen Zeitintervallen die tatsächliche kinetische Energie, Ist-Energie $E_{kin}$, des Roboterteils bestimmt wird und dass bei Überschreiten der maximal zulässigen Energie $E_{kin,max}$ die tatsächliche Arbeitsgeschwindigkeit v des Roboters reduziert wird.

Die Reduzierung der kinetischen Energie kann dabei situationsabhängig oder aber durch einen vorgegebenen Wert erfolgen. Es kann sich hierbei um einen absoluten oder einen relativen Wert, in letzterem Falle bezogen auf die momentane Arbeitsgeschwindigkeit oder aber eine durch den Arbeitsprozess gegebene optimale Arbeitsgeschwindigkeit, handeln. Die Reduzierung wird in der Regel in einem Bereich zwischen 3 und 10 %, vorzugsweise bei 5 % liegen.

In weiterer bevorzugter Ausgestaltung, mit welcher die Effizienz des dem erfindungsgemäßen Verfahren unterliegenden Roboters erhöht bzw. optimiert wird, ist vorgesehen, dass bei Unterschreiten der tatsächlichen kinetischen Energie $E_{kin}$ gegenüber der maximal zulässigen kinetischen Energie $E_{kin,max}$ überprüft wird, ob die tatsächliche momentane Arbeitsgeschwindigkeit die dem vom Roboter ausgeführten Arbeitsprozess gemäße Geschwindigkeit unterschreitet, wobei dann die tatsächliche Arbeitsgeschwindigkeit um einen vorgegebenen Wert, absolut oder relativ, erhöht wird.

Um bei gegebener maximaler Krafteinwirkung die maximale kinetische Energie und damit die Effizienz zu erhöhen, sieht die Erfindung in Weiterbildung vor, dass bei vorgegebener maximal zulässiger Kraft $F_{max}$ die zugelassene maximale kinetische Energie $E_{kin,max}$ durch eine dämpfende Abdeckung auf Roboterteilen erhöht wird, wobei eine elastische oder viskoelastische Abdeckung oder Ummantelung vorgesehen sein kann.

Weitere Vorteile und Merkmale der Erfindung ergeben sich aus den Ansprüche und aus der nachfolgenden Beschreibung, in der ein Ausführungsbeispiel der Erfindung unter Bezugnahme auf die Zeichnungen im einzelnen erläutert ist. Dabei zeigt:

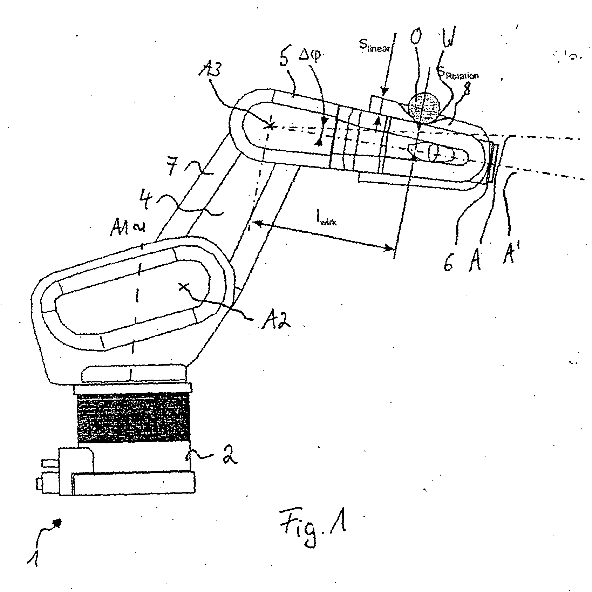

Fig. 1     eine schematische Seitenansicht eines Roboters, bei dem die Erfindung zum Einsatz kommt; und

Fig. 2     ein Ablaufdiagramm einer bevorzugten Ausgestaltung des erfindungsgemäßen Verfahrens.

Ein Roboter 1, insbesondere ein Kleinroboter, weist einen Sockel 2 auf, an dem ein Karussell 3 um eine erste vertikale Roboterachse A1 drehbar ist. Das Karussell 3 trägt eine Roboter-Schwinge 4, die am Karussell 3 um eine zweite horizontale Roboterachse A2 schwenkbar ist. Die Schwinge 4 trägt einen Roboter-Arm 5, der wiederum an der Schwinge um eine dritte horizontale Roboterachse A3 verschwenkbar angelenkt ist. Am der Schwinge 4 abgewandten Ende weist der Roboterarm 5 einen Handflansch 6 zur Befestigung einer Roboterhand auf, die nicht dargestellt ist. Eine solche Roboterhand weist ebenfalls um drei Achsen verschwenkbare Teile auf, deren erstes um die Mittelachse des Roboterarms 5 verschwenkbar ist.

Der erfindungsgemäße Roboter ist mit dämpfenden Abdeckungen 7, 8, die elastische oder viskoelastische Abdeckungen sein können, versehen bzw. ummantelt.

Stößt der Roboter, beispielsweise mit seinem Arm 5 im Abstand einer Wirklänge $l_{wirk}$ gegen ein Objekt O, so setzt sich der gesamte Bremsweg, bis das Objekt gegen das harte Gehäuse des Arms 5 stößt, aus zwei Komponenten zusammen, nämlich dem linearen Weg $S_{linear}$, der der Stärke der Abdeckung 8 entspricht sowie einem rotatorischen Bremsweganteil $S_{Rotation}$, der dem Versatz der Roboterarmachse A' bei Kollision mit dem Objekt O gegenüber der Ausrichtung der Roboterarmachse A in dem Falle, wenn das Objekt an dem genannten Ort nicht vorhanden wäre, also keine Kollision eintritt, entspricht:

$$S_{bremsweg} = S_{linear} + S_{Rotation} = S_{linear} + \sin\Delta\varphi * l_{wirk} \qquad (1),$$

wobei $l_{wirk}$ die Winkellänge des Armes und $\Delta\varphi$ die Winkelabweichung des Armes bei Stoß gegenüber der unbehinderten Bewegung ist. Der rotatorische Anteil ergibt sich durch Elastizitäten in der Antriebsmomentenübertragung, z.B. bei Kraftübertragung durch Ketten mit Federkettenspanner.

Die zwischen Roboterarm im Wirkpunkt W und dem Objekt O einwirkende Kraft bestimmt sich gemäß

$$F = \frac{E_{kin}}{S_{Bremsweg}} = \frac{E_{kin}}{S_{linear} + S_{Rotation}} , \qquad (2)$$

wobei F die einwirkende Kraft angibt und E die kinetische Energie des Roboterarms. Soll nun die auf ein externes Objekt einwirkende Kraft eine vorgegebene maximal zugelassene Kraft oder Maximalkraft $F_{max}$ nicht überschreiten, so entspricht dieser einer optimal zugelassenen kinetischen Energie $E_{kin,max}$.

Erfindungsgemäß ist nun vorgesehen, dass der sich aus dem Arbeitsprozess des Roboters ergebende Bewegungsablauf mit durch diesen bestimmten Geschwindigkeiten der einzelnen Roboterelemente und der gegebenen tatsächlichen kinetischen Energie $E_{kin}$ laufend, das heißt zyklisch in vorgegeben kurzen Zeitintervallen daraufhin überprüft wird,.ob die zulässige maximale kinetische Energie, die Maximalenergie $E_{kin,max}$ überschritten wird.

Die gesamte kinetische Energie des Roboters $E_{kin,Roboter}$ setzt sich dabei ggf. aus den einzelnen kinetischen Energien der einzelnen Elemente des Roboters zusammen, je nachdem wo der Wirkort W liegt:

$$E_{kinRoboter} = \sum_{i=1}^{n} E_{kin,i} \qquad (3),$$

wobei die einzelnen kinetischen Energien der Summation $E_{kin,j}$ die kinetischen Energien des Karussells, der Schwinge, des Arms sowie ggf. der Hand und einer Traglast bezeichnen.

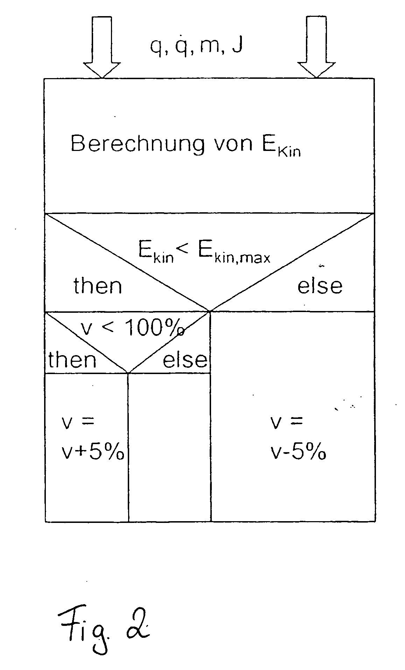

Das erfindungsgemäße Verfahren sieht nun wie im Ablaufdiagramm der Fig. 2 dargestellt ist, vor, dass aufgrund der Winkel q, der Winkelgeschwindigkeit $\dot{q}$ des jeweiligen Gelenkes, der Masse eines Teilkörpers sowie seines Trägheitstensors J gemäß

$$\begin{bmatrix} \dot{x} \\ \overline{\omega} \end{bmatrix} = \begin{bmatrix} \overline{\overline{Q}}_1(q) \\ \overline{\overline{Q}}(\overline{q}) \end{bmatrix} * \overline{\dot{q}} = Q(\overline{q}) * \overline{\dot{q}} \qquad (4)$$

die translatorische Schwerpunktgeschwindigkeit eines Teilkörpers $\overline{\dot{x}}$ sowie seine Winkelgeschwindigkeit $\overline{\omega}$ unter Heranziehen einer Berechnungsmatrix $\overline{\overline{Q}}_1$ für die translatorische Schwerpunktsgeschwindigkeit des Teilkörpers $\overline{\dot{x}}$ in Abhängigkeit des Winkels des Gelenks $\overline{q}$ und einer Berechnungsmatrix aus $\overline{\overline{Q}}_2$ für die Winkelgeschwindigkeit $\overline{\omega}$ in Abhängigkeit der Winkelgeschwindigkeit des Gelenks $\overline{\dot{q}}$ und hieraus wiederum die am Wirkort W einwirkende kinetische Energie $E_{kin}$ gemäß

$$E_{kin} = \frac{1}{2^0} \overline{\dot{x}}^T * m *_0 \overline{\dot{x}} + \frac{1}{2} \omega^T * \overline{\overline{J}} * \overline{\omega} \qquad (5)$$

bestimmt werden, wobei J der Trägheitstensor eines Teilkörpers ist.

Aufgrund dieser Bestimmung der tatsächlichen kinetischen Energie $E_{kin,ist}$ erfolgt sodann ein Vergleich derselben mit der, wie oben dargestellt, aufgrund der Maximalkraft sich ergebenden maximal zulässigen kinetischen Energie $E_{kin,max}$. Liegt erstere über letzterem, so verzweigt der Verfahrensablauf in den rechten Teil des Diagramms der Fig. 2: Es erfolgt dann eine Reduzierung der tatsächlichen Geschwindigkeit, der Ist-Geschwindigkeit v - dies repräsentant ist vorgenannte Geschwindigkeiten - um einen vorgegebenen Wert, beispielsweise im dargestellten Ausführungsbeispiel um 5% bezogen auf die maximal durch den Arbeitsprozess vorgesehene Arbeitsgeschwindigkeit. Die Berechnung erfolgt in einem nächsten Zeitintervall wiederum, so dass, wenn weiterhin eine Kraft- und Energieüberschreitung gegeben ist, wiederum eine Geschwindigkeitsreduzierung erfolgt und damit auch die kinetische Energie und - für den Fall einer Kollision - die einwirkende Kraft reduziert wird. Die Bestimmung der kinetischen Energie und der Vergleich mit der maximal zulässigen Energie kann in jedem Interpolations-Takt (IPO-Takt), also in jedem steuerungsinternen Takt der Robotersteuerung, und damit alle IO-I$_{ms}$ erfolgen.

Zeigt die Bestimmung der tatsächlichen kinetischen Energie, dass diese unterhalb der maximal zulässigen kinetischen Energie $E_{kin,max}$ liegt, so folgt ein weiterer Abgleich dahingehend, ob die tatsächliche Arbeitsgeschwindigkeit v unterhalb der im dargestellten Ausführungsbeispiel mit 100% angenommenen durch den Arbeitsprozess gewünschten Geschwindigkeit liegt. Ist dies der Fall, so wird die tatsächliche Geschwindigkeit beim vorgegebenen Wert, im dargestellten Ausführungsbeispiel um 5% bezogen auf die durch den Arbeitsprozess vorgegebene gewünschte Arbeitsgeschwindigkeit ($V_{soll}$), erhöht. Ist dies nicht der Fall, so wird unverändert mit den gegeben Werten gearbeitet.

Der Fall, dass die tatsächliche Geschwindigkeit v unterhalb der durch den Arbeitsprozess gewünschten Arbeitsgeschwindigkeit $V_{soll}$ liegt, kann z.B. dann eintreten, wenn nach Überschreitens der kinetischen Energie im vorangehenden Zeitintervallen - damit Absenkung derselben und der Arbeitsgeschwindigkeit - aufgrund veränderter Umstände, beispielsweise weil andere Achsen mit geringerer Geschwindigkeit bewegt werden oder sich die Kollisionssituation anders darstellt, in nachfolgenden Zeitintervallen die tatsächliche kinetische Energie $E_{kin}$ unterhalb der maximal zulässigen Energie $E_{kin,max}$ liegt.

**Patentansprüche**

**1.** Verfahren zum Begrenzen der Krafteinwirkung eines Roboterteils, wie eines Roboterarms, auf ein externes Objekt bei einer Kollision, **dadurch gekennzeichnet,**

- **dass** aufgrund einer bei einer Kollision auf das Objekt wirkenden maximal zugelassenen Kraft, Maximalkraft $F_{max}$, eine korrespondierende maximal zugelassene kinetische Energie, Maximal-Energie $E_{kin,max}$, des Roboterteils bestimmt wird,
- **dass** fortwährend in hinreichend kleinen Zeitintervallen die tatsächliche kinetische Energie, Ist-Energie $E_{kin}$, des Roboterteils bestimmt wird und
- **dass** bei Überschreiten der maximal zulässigen Energie $E_{kin,max}$ die tatsächliche Arbeitsgeschwindigkeit v des Roboters reduziert wird.

2. Verfahren nach Anspruch 1, **dadurch gekennzeichnet, dass** die Arbeitsgeschwindigkeit v um einen vorgegebenen Wert reduziert wird.

3. Verfahren nach Anspruch 1 oder 2, **dadurch gekennzeichnet, dass** die Arbeitsgeschwindigkeit um einen vorgegebenen absoluten Wert reduziert wird.

4. Verfahren nach Anspruch 1 oder 2, **dadurch gekennzeichnet, dass** die vorgegebene Arbeitsgeschwindigkeit um einen vorgegebenen relativen Wert reduziert wird.

5. Verfahren nach Anspruch 4, **dadurch gekennzeichnet, dass** die Arbeitsgeschwindigkeit um einen relativen Wert verringert wird, der auf die tatsächliche Geschwindigkeit bezogen ist.

6. Verfahren nach Anspruch 4, **dadurch gekennzeichnet, dass** die Arbeitsgeschwindigkeit um einen relativen Wert bezogen auf die durch die Maximalenergie $E_{kin,max}$ gegebenen Maximalgeschwindigkeit reduziert wird.

7. Verfahren nach einem der Ansprüche 4 bis 6, **dadurch gekennzeichnet, dass** die tatsächliche Geschwindigkeit um einen Wert zwischen 3 und 10 % reduziert wird.

8. Verfahren nach einem der Ansprüche 4 bis 7, **dadurch gekennzeichnet, dass** die tatsächliche Geschwindigkeit um einen Wert von 5 % reduziert wird.

9. Verfahren nach einem der vorangehenden Ansprüche, **dadurch gekennzeichnet, dass** bei Unterschreiten der tatsächlichen kinetischen Energie $E_{kin}$ gegenüber der maximal zulässigen kinetischen Energie $E_{kin,max}$ überprüft wird, ob die tatsächliche momentane Arbeitsgeschwindigkeit den dem vom Roboter ausgeführten Arbeitsprozess gemäßen Geschwindigkeitswert unterschreitet.

10. Verfahren nach Anspruch 9, **dadurch gekennzeichnet, dass**, wenn die tatsächliche Arbeitsgeschwindigkeit die dem vom Roboter ausgeführten Arbeitsprozess gemäße Arbeitsgeschwindigkeit unterschreitet, die tatsächliche Arbeitsgeschwindigkeit um einen vorgegebenen Wert, absolut oder relativ, erhöht wird.

11. Verfahren nach einem der vorangehenden Ansprüche, **dadurch gekennzeichnet, dass** bei vorgegebener maximal zulässiger Kraft $F_{max}$ die zugelassene maximale kinetische Energie $E_{kin,max}$ durch eine dämpfende Abdeckung auf Roboterteilen erhöht wird.

12. Verfahren nach Anspruch 11, **dadurch gekennzeichnet, dass** die maximal zulässige kinetische Energie durch elastische Abdeckungen erhöht wird.

13. Verfahren nach Anspruch 11, **dadurch gekennzeichnet, dass** die zulässige maximale kinetische Energie durch viskoelastische Abdeckungen erhöht wird.

14. Verfahren nach Anspruch 11, **dadurch gekennzeichnet, dass** die zulässige maximale kinetische Energie durch Elastizitäten im Antriebsstrang erhöht wird.

**Claims**

1. Method for limiting the force action of a robot part, such as a robot arm, on an external object during a collision, **characterized in that**:

- as a result of a maximum permitted force, maximum force $F_{max}$, acting on the object in the case of a collision, a corresponding maximum permitted kinetic energy, maximum energy $E_{kin,max}$, of the robot part is determined,
- continuously and at adequately short time intervals, the actual kinetic energy, actual energy $E_{kin}$, of the robot part is determined and
- on exceeding the maximum permitted energy $E_{kin,max}$, the actual operating speed v of the robot is reduced.

2. Method according to claim 1, **characterized in that** the operating speed v is reduced by a predetermined value.

3. Method according to claim 1 or 2, **characterized in that** the operating speed is reduced by a predetermined, absolute value.

4. Method according to claim 1 or 2, **characterized in that** the predetermined operating speed is reduced by a predetermined, relative value.

5. Method according to claim 4, **characterized in that** the operating speed is reduced by a relative value, which is related to the actual speed.

6. Method according to claim 4, **characterized in that** the operating speed is reduced by a relative value, based on the maximum speed given by the maximum energy $E_{kin,max}$.

7. Method according to one of the claims 4 to 6, **characterized in that** the actual speed is reduced by a value between 3 and 10%.

8. Method according to one of the claims 4 to 7, **characterized in that** the actual speed is reduced by a value of 5%.

9. Method according to one of the preceding claims, **characterized in that** on dropping below the actual kinetic energy $E_{kin}$ compared with the maximum permitted kinetic energy $E_{kin,max}$, a check is made as to whether the actual, instantaneous operating speed drops below the speed value in accordance with the operating process performed by the robot.

10. Method according to claim 9, **characterized in that** if the actual operating speed drops below the speed in accordance with the operating process performed by the robot, the actual operating speed is increased by a predetermined value, absolute or relative.

11. Method according to one of the preceding claims, **characterized in that** in the case of a predetermined, maximum permitted force $F_{max}$, the permitted maximum kinetic energy $E_{kin,max}$ is increased by a cushioning covering on robot parts.

12. Method according to claim 11, **characterized in that** the maximum permitted kinetic energy is increased by elastic coverings.

13. Method according to claim 11, **characterized in that** the maximum permitted kinetic energy is increased by viscoelastic coverings.

14. Method according to claim 11, **characterized in that** the permitted maximum kinetic energy is increased by elasticities in the drive line.

**Revendications**

1. Procédé de limitation de l'effet de la force d'un composant de robot, tel que le bras d'un robot, sur un objet extérieur lors d'une collision, **caractérisé en ce que**

. sur la base d'une force maximale autorisée agissant sur l'objet lors d'une collision, la Force Maximale $F_{max}$, on détermine une énergie cinétique maximale autorisée correspondante, l'Energie Maximale $E_{cin,max}$, du composant de robot,
. l'on détermine de manière constante à petits intervalles suffisants l'énergie cinétique effective, l'Energie Nominale $E_{cin}$, du composant de robot, et

. l'on réduit la vitesse de travail effective v du robot en cas de dépassement de l'Energie Maximale Autorisée $E_{cin,\,max}$.

2. Procédé selon la revendication 1, **caractérisé en ce que** la vitesse de travail v est réduite d'une valeur prédéfinie .

3. Procédé selon la revendication 1 ou 2, **caractérisé en ce que** la vitesse de travail est réduite d'une valeur absolue prédéfinie.

4. Procédé selon la revendication 1 ou 2, **caractérisé en ce que** la vitesse de travail prédéfinie est réduite d'une valeur relative prédéfinie.

5. Procédé selon la revendication 4, **caractérisé en ce que** la vitesse de travail est réduite d'une valeur relative qui est rapportée à la vitesse effective.

6. Procédé selon la revendication 4, **caractérisé en ce que** la vitesse de travail est réduite d'une valeur relative rapportée à la vitesse maximale donnée par l'Energie Maximale $E_{cin,max}$.

7. Procédé selon l'une quelconque des revendications 4 à 6, **caractérisé en ce que** la vitesse effective est réduite d'une valeur située entre 3 et 10 %.

8. Procédé selon l'une quelconque des revendications 4 à 7, **caractérisé en ce que** la vitesse effective est réduite d'une valeur de 5 %.

9. Procédé selon l'une quelconque des revendications précédentes, **caractérisé en ce qu'**en cas de dépassement de l'Energie Cinétique Effective $E_{cin}$ par rapport à l'Energie Cinétique Maximale Autorisée $E_{cin,max}$, on vérifie si la vitesse de travail effective momentanée est inférieure à la valeur de vitesse correspondant au processus de travail effectué par le robot.

10. Procédé selon la revendication 9, **caractérisé en ce que**, lorsque la vitesse de travail effective est inférieure à la vitesse de travail correspondant au processus de travail effectué par le robot, on augmente la vitesse de travail effective d'une valeur prédéfinie, absolue ou relative.

11. Procédé selon l'une quelconque des revendications précédentes, **caractérisé en ce que** dans le cas d'une Force Maximale Autorisée Prédéfinie $F_{max}$, on augmente l'énergie cinétique maximale autorisée par un revêtement amortissant sur des composants de robot.

12. Procédé selon la revendication 11, **caractérisé en ce que** l'énergie cinétique maximale autorisée est augmentée par des revêtements élastiques.

13. Procédé selon la revendication 11, **caractérisé en ce que** l'on augmente l'énergie cinétique maximale autorisée par des revêtements viscoélastiques.

14. Procédé selon la revendication 11, **caractérisé en ce que** l'on augmente l'énergie cinétique maximale autorisée par des élasticités dans la chaîne motrice.

Fig. 1

$q, \dot{q}, m, J$

Berechnung von $E_{Kin}$

$E_{kin} < E_{kin,max}$

then            else

$v < 100\%$

then    else

$v =$
$v+5\%$

$v =$
$v-5\%$

Fig. 2